# EUROPEAN PATENT APPLICATION

(11) **EP 4 318 660 A1**
(43) Date of publication of application: **07.02.2024**
(21) Application number: 22775148.4
(22) Date of filing: 10.03.2022
(51) Int. Cl.: H01M 4/505

(54) **POSITIVE ELECTRODE ACTIVE MATERIAL FOR LI ION SECONDARY BATTERIES, METHOD FOR PRODUCING SAID POSITIVE ELECTRODE ACTIVE MATERIAL, POSITIVE ELECTRODE FOR LI ION SECONDARY BATTERIES, AND LI ION SECONDARY BATTERY**

(30) Priority: 23.03.2021 JP 2021048017
(71) Applicant: Tanaka Kikinzoku Kogyo K.K., Tokyo 100-6422 (JP); NATIONAL UNIVERSITY CORPORATION YOKOHAMA NATIONAL UNIVERSITY, Yokohama-shi Kanagawa 240-8501 (JP)
(72) Inventor: MASAHIRO, Yasushi, Tokyo 100-6422 (JP); YABUUCHI, Naoaki, Yokohama-shi, Kanagawa 240-8501 (JP); MATSUZAKI, Kaito, Yokohama-shi, Kanagawa 240-8501 (JP)
(74) Representative: Weickmann & Weickmann PartmbB
(86) International application number: PCT/JP2022/010543
(87) International publication number: WO 2022/202356

(57) **Abstract**

The present invention relates to a positive electrode active material for a Li-ion secondary battery containing a Li-transition metal composite oxide. This Li-transition metal composite oxide has a layered rock salt crystal structure, and is represented by a formula (1): (1-x)Li₂RuO₃-xLiMnO₂ (Mn is trivalent Mn, and x is a real number satisfying 0 < x < 1). In addition, when part of Ru and/or Mn of the Li-transition metal composite oxide is replaced with a metal M such as Ti, durability can be improved. According to the present invention, a reduced amount of Ru but a higher capacity can be achieved for a positive electrode active material containing Li₂RuO₃.

## Description

### BACKGROUND OF THE INVENTION

### FIELD OF THE INVENTION

The present invention relates to an active material used in a positive electrode of a Li-ion secondary battery, and a method for producing the same. More particularly, it relates to a positive electrode active material for a Li-ion secondary battery that is an active material containing a Li-rich Li-transition metal composite oxide, contains Ru as a principal transition metal, but can have a reduced amount of Ru and a higher capacity.

### DESCRIPTION OF THE RELATED ART

Li (lithium)-ion secondary batteries have higher energy density and can be easily reduced in size/weight as compared with secondary batteries such as nickel-hydrogen storage batteries and nickel-cadmium storage batteries. Therefore, use of Li-ion secondary batteries in small batteries used in portable electronic devices, vehicle batteries for hybrid vehicles (HV, PHV) and electric vehicles (EV), and the like has been widely spread.

One of elements largely affecting battery characteristics of a Li-ion secondary battery is a positive electrode active material responsible for an electrochemical reaction of a positive electrode. As a positive electrode active material contained in the positive electrode of a Li-ion secondary battery, Li-transition metal composite oxides represented by LiMeO₂ (Me: metal element such as Co, Ni, or Mn) have been mainly used up to now. In recent years, because of requirements for further reduction in size/weight and increase of discharge capacity, Li-transition metal composite oxides having a higher Li content such as Li₂MnO₃-LiMO₂ (M: metal element such as Co, Ni, or Mn) have been examined for use in Li-ion secondary batteries for portable electronic devices and vehicles. Such a Li-transition metal composite oxide having a higher Li content is designated as "Li-rich" in some cases.

In order to further increase a discharge capacity of a Li-ion secondary battery, improvement of a transition metal constituting a Li-transition metal composite oxide has also been proposed. In the Li₂MnO₃ that has attracted attention as the above-described Li-rich Li-transition metal composite oxide, irreversible oxygen extraction is liable to proceed when charge and discharge is repeated, and it is concerned that the crystal structure collapses and lowers the discharge voltage below the initial one. As a result, such a positive electrode material has a problem of reducing the energy density.

Therefore, as a Li-transition metal composite oxide composed of a transition metal different from those conventionally used, Li₂RuO₃ containing Ru (ruthenium) as a constituting element is regarded as promising. In Li₂RuO₃, oxygen extraction is difficult to proceed owing to strong covalency between a Ru ion and an oxide ion, and therefore, oxygen extraction caused in a Li-transition metal composite oxide of Mn or the like is difficult to occur. Besides, Ru is a metal element having high electronic conductivity, and exhibits reversible anionic redox of oxygen through electron transfer. This anionic redox acts as charge compensation, and hence contributes to capacity increase as well as charge compensation due to valence change of a Ru ion (Ru⁴⁺ to Ru⁵⁺). Owing to these actions of Ru, Li₂RuO₃ is expected as a positive electrode active material capable of not only increasing a capacity but also increasing an energy density by maintaining a discharge voltage.

### Prior Art Document

### Patent Document

Patent Document 1
Japanese Patent Application Laid-Open No. 2016-51504

### Non Patent Document

Non Patent Document 1
M. Sathiya et. al., "High Performance Li2Ru1-yMnyO3 (0.2 ≤ y ≤ 0.8) Cathode Materials for Rechargeable Lithium-Ion Batteries", Chemistry of Materials Vol. 25 (No.7), p. 1121-1131 (2013)

As described above, it is deemed that Li₂RuO₃ is a Li-transition metal composite oxide promising as a positive electrode active material for a Li-ion secondary battery, but Ru is a rare metal. Therefore, it is presumed that use of this positive electrode active material in a broad range would be restricted in material cost and the like.

Therefore, in order to cope with this problem, attempts have been made to reduce a use amount of Ru by replacing part of Ru with another transition metal. For example, Non Patent Document 1 discloses a positive electrode active material to which Li₂Ru_{1-y}Mn_{y}O₃, that is, a Li-transition metal composite oxide obtained by replacing part of Ru (Ru⁴⁺) with Mn (Mn⁴⁺), is applied. This Li-transition metal composite oxide having Ru partly replaced has a layered rock salt crystal structure similarly to Li₂RuO₃, and has a structure suitable for extraction and insertion of Li ions at the time of charge and discharge. It is reported that a discharge capacity of 220 mAh/g or more is exhibited by a Li-ion secondary battery to which this positive electrode active material is applied.

### SUMMARY OF THE INVENTION

### Technical Problem

According to examinations made by the present inventors, however, the partial replacement with Mn (Mn⁴⁺) in Li₂RuO₃ of the related art cannot be optimum means. According to the present inventors, the related art reduces, although partially, the above-described efficacy of Ru, and as the amount of Mn (Mn⁴⁺) added is increased, the discharge capacity is lowered. Besides, it is concerned that reduction of the effect of suppressing oxygen extraction caused by reduction of the Ru amount may affect the cycle life through oxygen extraction.

The present invention has been devised under this background, and provides a positive electrode active material containing Li₂RuO₃ as a Li-transition metal composite oxide that has a reduced amount of Ru but is capable of a higher capacity. Besides, the present invention reveals, based on the constitution of this improved positive electrode active material, a positive electrode active material excellent in durability, particularly durability at a high temperature.

### Solution to Problem

Regarding the above-described problems, it is deemed that the course of replacing Ru with another transition metal for reducing the use amount of Ru is suitable. What matters is how the action of Ru, which is probably reduced through the replacement, is covered. As described above, in a positive electrode active material containing Li₂RuO₃, two charge compensations, that is, anionic redox caused by Ru and valence change (Ru⁴⁺ to Ru⁵⁺) of the cation (Ru), are caused. On the contrary, in the above-described related art (Non Patent Document 1), Mn used for replacing Ru is tetravalent Mn (Mn⁴⁺), and when tetravalent Mn is thus used, the charge compensation due to the valence change of the cation is not caused. Therefore, the discharge capacity is lowered when the amount of Mn added is increased. Accordingly, the present inventors decided to apply trivalent Mn (Mn³⁺) as the transition metal for replacing Ru. Then, a Li-transition metal composite oxide obtained by replacing part of Ru of Li₂RuO₃ with trivalent Mn was earnestly studied, resulting in finding that a positive electrode active material containing this composite oxide can exhibit favorable properties, and thus, the present invention was accomplished.

Specifically, the present invention is drawn to positive electrode active material for a Li-ion secondary battery containing a Li-transition metal composite oxide, in which the Li-transition metal composition oxide has a layered rock salt crystal structure, and is represented by formula (1): (1-x)Li₂RuO₃-xLiMnO₂. In the formula (1), Mn is trivalent Mn, and x is a real number satisfying 0 < x < 1.

When the Li-transition metal composite oxide replaced with trivalent Mn is used as a positive electrode active material, valence change of Mn (Mn³⁺ to Mn⁴⁺) is caused at the time of charge and discharge. This valence change can act as charge compensation similarly to the valence change of Ru. Accordingly, in the present invention, even when the Ru amount in Li₂RuO₃ is reduced, a discharge capacity can be ensured owing to the charge compensation of the cation. Now, a positive electrode active material of the present invention and a method for producing the same, and a Li-ion secondary battery containing the positive electrode active material will be described in detail.

### (I) Positive Electrode Active Material of the Invention

### (I-1) Positive Electrode Active Material of the Invention

A positive electrode active material of the present invention is composed of a Li-transition metal composite oxide having a composition represented by the formula (1) of (1-x)Li₂RuO₃x-LiMnO₂. The coefficient x for the number of atoms of Mn is a real number satisfying 0 < x < 1. When x is larger than 0, the Ru amount can be reduced by replacement with trivalent Mn. Since part of Ru of Li₂RuO₃ is replaced with trivalent Mn in the present invention, x is less than 1. Preferably, x in the formula (1) satisfies 0.1 ≤ x ≤ 0.9. This is because the Ru amount can be effectively reduced when x is 0.1 or more. When x exceeds 0.9, the ratio of the Ru amount is reduced, and hence it is concerned that a discharge capacity that can be exhibited as the positive electrode active material may be lowered. More preferably, 0.3 ≤ x ≤ 0.7. Besides, the positive electrode active material of the present invention is Li-rich composite oxide, and thus the number of atoms (2 - x) of Li in the formula (1) preferably satisfies 1 < (2 - x) ≤ 1.9.

In the Li-transition metal composite oxide applied in the present invention, for confirmation of the replacement with trivalent Mn, the composite oxide can be analyzed by several means at the stage of production, or at the time of discharge. For example, the presence of trivalent Mn can be detected from a diffraction pattern obtained by X-ray diffraction (XRD) analysis. Specifically, in a diffraction pattern obtained by XRD analysis using a CuKα ray, the replacement with trivalent Mn can be confirmed when the position of a diffraction peak of Miller index on the (002) plane appearing in the vicinity of 18° is shifted to a higher degree side by replacing trivalent Mn in Li₂RuO₃ as compared with that in Li₂RuO₃ not replaced. The presence of trivalent Mn can also be confirmed since diffraction lines on the (020) plane and the (1-11) plane of Li₂RuO₃ are broad. In addition, in the Li-transition metal composite oxide of the present invention, a diffraction peak derived from LiMnO₂ is not observed, and it is thus confirmed that trivalent Mn contributes to the replacement in Li₂RuO₃. Besides, in a diffraction pattern of Li₂RuO₃ replaced with tetravalent Mn, a superlattice peak is observed in the vicinity of about 20°. In the diffraction pattern of Li₂RuO₃ replaced with trivalent Mn of the present invention, this superlattice peak is not observed, and thus, the valence of Mn can be estimated.

Alternatively, as analysis means different from XRD, the state of Mn can be confirmed based on an absorption spectrum measured by X-ray absorption spectroscopy of the Li-transition metal composite oxide. For example, the state of Mn can be confirmed by referring to a spectrum of a K absorption edge of Mn obtained by X-ray absorption near edge structure analysis (XANES). At this point, when the composite oxide is analyzed during a charging process from production/fully charged state, the spectrum of the K absorption edge of Mn is shifted toward a higher energy side. On the contrary, when the composite oxide in a discharged state is discharged, the absorption edge spectrum is shifted toward a lower energy side. It can be confirmed based on this analysis result that the valence change of Mn is reversible, namely, the charge compensation by Mn proceeds reversibly, in the Li-transition metal composite oxide of the present invention.

In addition to the above-described analysis means, the presence of trivalent Mn in the Li-transition metal composite oxide of the present invention can be confirmed also based on an absorption spectrum obtained by X-ray photoelectron spectroscopy (XPS). Based on a peak position in an XPS spectrum of Mn2p present on the surface of the Li-transition metal composite oxide, the valence can be determined.

The Li-transition metal composite oxide of the present invention has a layered rock salt crystal structure similarly to Li₂RuO₃. A layered crystal structure is a structure suitable for extraction and insertion of Li ions caused at the time of charge and discharge. The positive electrode active material of the present invention contains, as a principal component, secondary particles corresponding to aggregation of primary particles of the Li-transition metal composite oxide. Here, a primary particle size of the Li-transition metal composite oxide is preferably 1 µm or more and 50 µm or less on average. In order to obtain a precise discharge capacity, it is preferable to cause extraction and insertion of Li ions from the surface and the inside of the oxide particle. Therefore, the particle size of the primary particle is preferably 10 µm or less. In order to improve discharge rate characteristics by forming Li diffusion path at an early stage, the lower limit of the primary particle size is preferably 1 µm or more. Such a crystal diameter can be measured by electron microscope observation (SEM or TEM) of composite oxides.

In the Li-transition metal composite oxide constituting the positive electrode active material of the present invention, the replacement of Ru with trivalent Mn is essential, and in addition, a prescribed another transition metal element can be used for replacement. This another transition metal element is used for replacing Ru and/or Mn. In other words, this positive electrode active material is a positive electrode active material for a Li-ion secondary that is obtained by replacing part of Ru and/or Mn of the above-described Li-transition metal composite oxide ((1-x)Li₂RuO₃x-LiMnO₂) applied in the present application, with a metal M, and is represented by a formula (2): (1-y-z)Li₂RuO₃-yLiMnO₂-zLiₐMO_{b}. In the formula (2), the metal M corresponding to another transition metal element is at least one of Ti, Nb, Y, Zr, Hf, and Ta. y and z are real numbers satisfying 0 < y + z < 1. Regarding a, b, and c, a = 1 and b = 4 for M of a monovalent metal, a = 2 and b = 3 for M of a tetravalent metal, and a = 3 and b = 4 for M of a pentavalent metal.

The addition of and the replacement with the metal M in the Li-transition metal composition oxide is constitution for improving durability, particularly durability at a high temperature of the positive electrode active material. In the Li-transition metal composite oxide applied in the present invention, the Ru amount is reduced by the replacement with trivalent Mn. As described above, Ru (ions) has strong covalency with oxygen (ions), and has an effect of suppressing oxygen extraction through charge and discharge. This effect suppresses irreversible oxygen extraction in charge and discharge which is concerned about a conventional Li₂MnO₃ composite oxide. In the present invention, this effect may be lowered depending on the Ru amount in the composite oxide. Oxygen extraction caused at the time of charge and discharge is a cause of collapse of the crystal structure of the composite oxide, and thus reduces cycle life. Such oxygen extraction easily proceeds as the ambient temperature increases.

Ti, Nb, Y, Zr, Hf, Ta, and the like are electrochemically inert transition metals, and are less susceptible to influence of electrochemical changes, such as extraction and insertion of Li ions caused at the time of charge and discharge, and valence change of the cation (redox). It is presumed that since these transition metals have a high ionic bonding property, oxygen extraction can be suppressed to increase crystal stability. Owing to these effects, the replacement with the metal M such as Ti can improve the durability of the Li-transition metal composite oxide of the present invention, and maintain the favorable discharge capacity thereof. Specific examples of the Li-transition metal composite oxide of the present invention in which these Ti and the like are added/replaced include the following:
- When the metal M is a tetravalent metal (Ti, Zr, or Hr), examples include:
   (1-y-z)Li₂RuO₃-yLiMnO₂-zLi₂TiO₃,
   (1-y-z)Li₂RuO₃-yLiMnO₂-zLi₂ZrO₃, and
   (1-y-z)Li₂RuO₃-yLiMnO₂-zLi₂HfO₃;
- when the metal M is a pentavalent metal (Nb, or Ta), examples include:
   (1-y-z)Li₂RuO₃-yLiMnO₂-zLi₃NbO₃, and
   (1-y-z)Li₂RuO₃-yLiMnO₂-zLi₃TaO₃; and
- when the metal M is a monovalent metal (Y), an example includes:
   (1-y-z)Li₂RuO₃-yLiMnO₂-zLiYO₄.

In the formula (2), the coefficient y and the coefficient z are real numbers satisfying 0 < y + z < 1. The coefficient y is required to be set so as to prevent the discharge capacity from lowering due to reduction of the ratio of the Ru amount as described above. The coefficient z should be set considering that the metal M is electrochemically inert, and hence does not affect battery characteristics such as the charge compensation. For these reasons, y + z is 0.9 or less. y + z preferably satisfies 0.1 ≤ y + z ≤ 0.9, and more preferably satisfies 0.3 ≤ y + z ≤ 0.7. As for favorable ranges of the coefficient y and the coefficient z, the coefficient y preferably satisfies 0.1 ≤ a ≤ 0.7, and more preferably 0.2 ≤ a ≤ 0.5. The coefficient z preferably satisfies 0 < b ≤ 0.5, and more preferably 0.1 ≤ b ≤ 0.3. It is noted that the number of atoms of Li (2 - y - (2 + a)z) preferably satisfies 1 < (2 - y - (2 + a)z) ≤ 1.9 also in this Li-transition metal composite oxide.

The Li-transition metal composite oxide constituting the positive electrode active material of the present invention described so far can be measured for the composition analysis by inductively coupled plasma analysis (ICP), energy dispersive X-ray spectrometry (EDS) and the like. By employing these analysis means, contents of the respective metal elements (Li, Ru, Mn, and the metal M) can be measured to obtain the composition (atomic ratio).

The positive electrode active material of the present invention contains the Li-transition metal composite oxide described above as the principal component. As other components, incidental impurities derived from a raw material, and incidental impurities mixed in production process can be contained. As specific elements, Fe, Cr, Ni, Cu and the like can be contained. A content of the Li-transition metal composition oxide in the positive electrode active material of the present invention is preferably 80% by mass or more, and more preferably 99% by mass or more.

### (I-2) Method for Producing Positive Electrode Active Material of the Invention

Next, a method for producing the Li-transition metal composite oxide constituting the positive electrode active material of the present invention will be described. The method for producing a composite oxide applied in the present invention is basically the same as a method for producing a conventional composite oxide, particularly, a Li₂RuO₃ composite oxide. It is, however, preferable to employ a production method using a solid state reaction for mixing solid raw materials and firing the resultant. In the present invention, the production is performed with part of Ru of Li₂RuO₃ replaced with trivalent Mn. Considering this prerequisite, it is not preferable to cause valence change (oxidation) of Mn during the production process. Therefore, the solid state reaction in which a reaction atmosphere is comparatively easily controlled is preferred.

The method for producing a positive electrode active material of the present invention is a method for producing a positive electrode active material for a Li-ion secondary battery including a mixing step of mixing a Li compound, a Ru compound, and a trivalent Mn compound to produce a precursor substance, and a firing step of firing the precursor substance at 700°C or more and 1100°C or less to generate a Li-transition metal composite oxide, wherein the firing step is performed in a non-oxidizing atmosphere. For a Li-transition metal composite oxide in which Ru and/or Mn is replaced with a metal M, a precursor substance of a Li compound, a Ru compound, a trivalent Mn compound, and a compound of the metal M is produced in the above-described method, and the precursor substance is fired under the same conditions.

In the above-described method, examples of a raw material of the Li compound include Li carbonate, Li acetate, Li nitrate, Li hydroxide, Li chloride, Li sulfide, and Li oxide. Among these, Li carbonate and Li oxide are preferred in consideration of safety and cost. As the Ru compound, the trivalent Mn compound, and the compound of the metal M, carbonates, hydroxides, oxyhydroxides, acetates, citrates, oxides and the like of these metals can be used. Oxides are preferably applied for cost and stability reasons. Since replacement with trivalent Mn is conducted for the Li₂RuO₃ composite oxide in the present invention, a compound of trivalent Mn is used as the Mn compound.

In the method for producing a Li-transition metal composite oxide of the present invention, respective compounds corresponding to respective raw materials are first mixed to produce a precursor substance in which these compounds are homogeneously mixed. The composition of the Li-transition metal composite oxide to be produced is preferably adjusted in this mixing step. For adjusting the composition of the composite oxide, the masses (molar amounts) of the respective compounds are adjusted to obtain the composition represented by each of the formula (1) or the formula (2) described above. Some types of the Li compound may, however, volatilize by heating in the firing step in some cases. Therefore, it is preferable to increase the mixing amount of the some types of the Li compound by about 1% or more and 10% or less as compared with the mass corresponding to the target composition.

In the mixing step, grinding and mixing can be performed if necessary. When a raw material compound in the shape of a powder is used, if the particle size is large (15 µm or more), grinding is performed for ensuring uniformity of the precursor substance. When grinding is performed in the mixing step, a grinder such as a ball mill, a jet mill, a rod mill, or a sand mill can be used. The grinding may be either dry grinding or wet grinding. Preferably, wet grinding using water or an organic solvent as a dispersion medium is employed. The precursor substance resulting from the mixing step may also be subjected to granulation, pelletization or the like if necessary.

When the precursor substance obtained by mixing the respective compounds including the Li compound is heated and fired, the Li-transition metal composite oxide used in the positive electrode active material of the present invention is synthesized. A heating temperature in the firing step is 700°C or more and 1100°C or less. When the temperature is 700°C or less, the solid state reaction for generating the composite oxide is difficult to proceed. A temperature exceeding 1100°C is not preferred because the Li-transition metal composite oxide is melted. The heating temperature is more preferably 800°C or more and 1000°C or less. In order to prevent an unreacted portion of the raw material compound (such as Li carbonate) from remaining, a heat treatment time is preferably 1 hour or more and 48 hours or less. As heating means used in the firing step, a general heat treatment apparatus such as an electric furnace, a fixed furnace of a batch furnace or the like, a rotary furnace of a rotary kiln or the like, or a continuous furnace of a roller hearth kiln or the like can be used.

This firing step needs to be performed in a non-oxidizing atmosphere. This is for suppressing oxidation of the trivalent Mn contained in the Mn compound added in the mixing step of the raw materials so as to generate a composite oxide using the trivalent Mn. If the firing is performed in an oxidizing atmosphere such as in the air, the trivalent Mn used as the raw material is oxidized to become tetravalent Mn, and hence the Li-transition metal composite oxide of the present invention cannot be generated. Examples of this heat treatment atmosphere include an inert gas atmosphere of argon, nitrogen, or the like, and a reducing atmosphere of hydrogen or the like. Alternatively, a reduced pressure atmosphere of 0.1 MPa or less may be employed.

Through these mixing step and firing step, the positive electrode active material containing the Li-transition metal composite oxide represented by each of the formula (1) or formula (2) described above can be produced. This Li-transition metal composite oxide may be appropriately subjected to washing with deionized water or the like, and drying. A post-treatment, for example, grinding and classifying the Li-transition metal composite oxide may also be performed in order to form the produced positive electrode active material into a powder having a particle size suitably used as a positive electrode of a Li secondary battery.

### (I-2) Positive Electrode for Li-ion Secondary Battery and Li-ion Secondary Battery to which Positive Electrode Active Material of the Invention is Applied

The positive electrode active material of the present invention can be incorporated in a positive electrode of a Li-ion secondary battery, and in a Li-ion secondary battery with a similar constitution as in a common Li-ion secondary battery.

The positive electrode for a Li-ion secondary battery is composed of components such as a conductive material and a binder in addition to the positive electrode active material of the present invention. Examples of the conductive material include one or more of conducting materials such as a carbon powder of graphite, acetylene black, furnace black, and the like, carbon whisker, carbon fiber, a metal powder, metal fiber, and a conductive ceramic material. Examples of the binder include one or more of polyvinylidene fluoride (PVDF), polytetrafluoroethylene (PTFE), polyethylene, polypropylene polyhexafluoropropylene, styrene-butadiene rubber, polyacrylonitrile, and modified polyacrylonitrile.

The positive electrode is produced by preparing an electrode mixture by mixing these components with a solvent such as N-methylpyrrolidone, toluene, or water, forming an electrode mixture layer by applying the electrode mixture on a collector (substrate) of an aluminum foil or the like, and molding the electrode mixture layer under pressure.

A Li-ion secondary battery is constituted, as principal elements, of a positive electrode containing the above-described positive electrode active material of the present invention, a negative electrode, an electrolyte, and a separator.

The negative electrode is composed of components such as a negative electrode active material, a conductive material, and a binder. As the negative electrode active material, not only carbon materials such as graphite and hard carbon but also known materials including titanium-based materials such as Li titanate, and silicon-based materials such as silicon oxide can be used. The negative electrode active material is not especially limited as long as it is a material in a shape capable of absorbing/desorbing Li ions at the time of charge and discharge. The other components constituting the negative electrode (the negative electrode active material, the conductive material, the binder and the like) can be the same as those of the positive electrode. In addition, a production process for the negative electrode is also the same as that for the positive electrode.

As an electrolytic solution, known constituting materials can be used. The electrolytic solution is composed of an electrolyte and a solvent. As the electrolyte, LiPF₆ (lithium hexafluorophosphate), LiFSA (LiFSI: lithium bis(fluorosulfonyl)amide), LiTFSI (lithium bis(trifluoromethanesulfonyl)imide), LiClO₄ (lithium perchlorate), and LiBF₄ (lithium tetrafluoroborate) or the like can be applied. Examples of the solvent include EC (ethylene carbonate), PC (propylene carbonate), DMC (dimethyl carbonate), EMC (ethyl methyl carbonate), DEC (diethyl carbonate), and TMP (trimethyl phosphate), and a solvent of one of these or a mixture of these can be used.

Other constituting elements of the Li-ion secondary battery are a separator, a terminal, an insulating plate, a battery case (a battery can, a battery cover), and the like, and as these components, those commonly used can be applied.

### Advantageous Effects of Invention

As described so far, the present invention is drawn to a positive electrode active material for a Li-ion secondary battery, which mainly contains a Li-transition metal composite oxide obtained by replacing part of Ru of Li₂RuO₃ with trivalent Mn (Mn³⁺). The present invention reduces a use amount of Ru in Li₂RuO₃ capable of exhibiting favorable battery performances as a positive electrode active material, and contributes to cost reduction thereof. Since the trivalent Mn having an effect of charge compensation is applied, the positive electrode active material of the present invention has a high discharge capacity even though the use amount of Ru is reduced. In the present invention, when part of a transition metal is replaced with another transition metal such as Ti, oxygen extraction caused at the time of charge and discharge can be suppressed to improve durability.

### BRIEF DESCRIPTION OF THE DRAWINGS

Fig. 1 illustrates XRD diffraction profiles of Li_{1.25}Mn_{0.25}Ru_{0.5}O₂ (x = 0.33), Li_{1.2}Mn_{0.4}Ru_{0.4}O₂ (x = 0.5), and Li_{1.17}Mn_{0.5}Ru_{0.33}O₂ (x = 0.6) produced in First Embodiment;
Fig. 2 illustrates SEM images of Li_{1.25}Mn_{0.25}Ru_{0.5}O₂ (x = 0.33) and Li_{1.2}Mn_{0.4}Ru_{0.4}O₂ (x = 0.5) produced in First Embodiment;
Fig. 3 illustrates an EDS profile of Li_{1.25}Mn_{0.25}Ru_{0.5}O₂ (x = 0.33) produced in First Embodiment;
Fig. 4 illustrates graphs of results of a constant current charging/discharging test of Li_{1.25}Mn_{0.25}Ru_{0.5}O₂ (x = 0.33), Li_{1.2}Mn_{0.4}Ru_{0.4}O₂ (x = 0.5), and Li_{1.17}Mn_{0.5}Ru_{0.33}O₂ (x = 0.6) produced in First Embodiment;
Fig. 5 is a diagram illustrating the relationship between a discharge capacity and cycle number obtained in the constant current charging/discharging test of Li_{1.25}Mn_{0.25}Ru_{0.5}O₂ (x = 0.33), Li_{1.2}Mn_{0.4}Ru_{0.4}O₂ (x = 0.5), and Li_{1.17}Mn_{0.5}Ru_{0.33}O₂ (x = 0.6) produced in First Embodiment;
Fig. 6 is a diagram illustrating an X-ray absorption spectrum of a K absorption edge of Mn of Li_{1.25}Mn_{0.25}Ru_{0.5}O₂ (x = 0.33) produced in First Embodiment obtained immediately after the production to charge/discharge process;
Fig. 7 illustrates XRD diffraction profiles of Li_{1.3}Ru_{0.5}Mn_{0.1}Ti_{0.1}O₂ (y = z = 0.14), and Li_{1.28}Ru_{0.42}Mn_{0.15}Ti_{0.15}O₂ (y = z = 0.21) produced in Second Embodiment;
Fig. 8 illustrates SEM images of Li_{1.3}Ru_{0.5}Mn_{0.1}Ti_{0.1}O₂ (y = z = 0.14), and Li_{1.28}Ru_{0.42}Mn_{0.15}Ti_{0.15}O₂ (y = z = 0.21) produced in Second Embodiment;
Fig. 9 illustrates graphs of results of a constant current charging/discharging test of Li_{1.3}Ru_{0.5}Mn_{0.1}Ti_{0.1}O₂ (y = z = 0.14), and Li_{1.28}Ru_{0.42}Mn_{0.15}Ti_{0.15}O₂ (y = z = 0.21) produced in Second Embodiment;
Fig. 10 illustrates graphs of results of a constant current charging/discharging test (50°C) of First Embodiment (Li_{1.25}Mn_{0.25}Ru_{0.5}O₂) and Second Embodiment (Li_{1.28}Ru_{0.42}Mn_{0.15}Ti_{0.15}O₂);
Fig. 11 illustrates graphs of results of a constant current charging/discharging test, performed in respective electrolytic solutions (LiPF₆ and LiFSA), of Li_{1.17}Mn_{0.5}Ru_{0.33}O₂ (x = 0.6) examined in Third Embodiment; and
Fig. 12 is a diagram illustrating the relationship between a discharge cycle and cycle number obtained in the constant current charging/discharging test, performed in the respective electrolytic solutions (LiPF₆ and LiFSA), of Li_{1.17}Mn_{0.5}Ru_{0.33}O₂ (x = 0.6) examined in Third Embodiment.

### DETAILED DESCRIPTION OF THE PREFERRED EMBODIMENTS

First Embodiment: An embodiment of the present invention will now be described. In the present embodiment, a positive electrode active material containing a Li-transition metal composite oxide having a composition of the formula (1) in which part of Ru of Li₂RuO₃ was replaced with trivalent Mn (Mn³⁺) was produced, and subjected to structural analysis/composition analysis by XRD and the like. Then, the thus produced positive electrode active material was used in a positive electrode to produce a Li-ion secondary battery, and electrochemical properties thereof were evaluated.

### [Production of Positive Electrode Active Material]

A Li carbonate (Li₂CO₃) powder, a Ru oxide (RuO₂) powder, and a Mn oxide (Mn₂O₃) powder were mixed to produce a precursor substance. At this point, the masses of the respective raw material powders were adjusted to obtain x in the formula (1) of 0.33, 0.5, and 0.6, and thus, three precursor substances were produced. In the present embodiment, however, only the Li carbonate powder was mixed in an amount larger by 3% than the theoretical mass. This is for preventing Li carbonate from volatilizing at the time of firing at a high temperature. In a step of mixing the raw material compounds, a wet ball mill (volume: 45 mL, grinding medium: zirconia balls, 10 mm: 5 pcs - 5 mm: 10 pcs - 1 mm: 4 g) was used for grinding and mixing at a rotational speed of 300 rpm for 5 hours to produce the precursor substances. Each precursor substance resulting from the mixing step was compressed into a pellet.

Then, the pellet-shaped precursor substance was fired to obtain a composite oxide. As firing conditions in the firing step, heating was performed at a temperature increase rate of 10°C/min up to 900°C, and the heating was retained for 12 hours after reaching 900°C. During this heating process, an argon gas was caused to flow through a furnace to maintain the heating atmosphere at a non-oxidizing atmosphere. After the heating for 12 hours, the temperature was lowered by furnace cooling to room temperature, and a Li-transition metal composite oxide of the formula (1) (x = 0.33, 0.5, or 0.6) was taken out.

### [XRD Analysis]

The Li-transition metal composite oxides constituting the positive electrode active material produced as described above were subjected to XRD analysis to confirm the crystal structures. The XRD analysis was conducted with Bruker D2 PHASER used as a test apparatus, with a CuKα ray used as the X-ray source at a sweep speed of 22.5°/min.

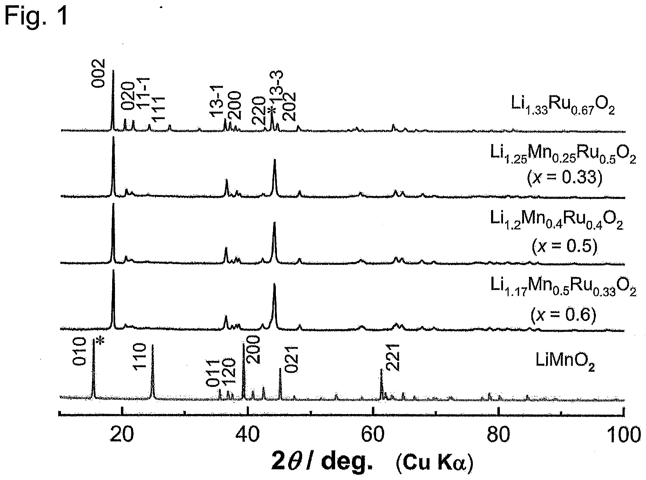

Fig. 1 illustrates XRD profiles of the three Li-transition metal composite oxides produced in the present embodiment, that is, Li_{1.25}Mn_{0.25}Ru_{0.5}O₂ (x = 0.33), Li_{1.2}Mn_{0.4}Ru_{0.4}O₂ (x = 0.5), and Li_{1.17}Mn_{0.5}Ru_{0.33}O₂ (x = 0.6). Fig. 1 also illustrates, for reference, a profile of LiMnO₂ and a profile of Li_{1.33}Ru_{0.57}O₂ (Li₂RuO₃) having a layered rock salt crystal structure. It was confirmed, based on Fig. 1, that all of the three Li-transition metal composite oxides produced in the present embodiment (Li_{1.25}Mn_{0.25}Ru_{0.5}O₂ (x = 0.33), Li_{1.2}Mn_{0.4}Ru_{0.4}O₂ (x = 0.5), and Li_{1.17}Mn_{0.5}Ru_{0.33}O₂ (x = 0.6)) have a crystal structure similar to that of Li₂RuO₃, namely, the layered rock salt crystal structure. Accordingly, it was confirmed that the crystal structure is not largely changed by replacement with trivalent Mn in Li₂RuO₃.

In the XRD profiles of the composite oxides obtained by the replacement with trivalent Mn of the present embodiment, no diffraction peak derived from LiMnO₂ was observed. In addition, a superlattice line in the vicinity of 20°, which is observed in a composite oxide replaced with tetravalent Mn, was not also observed, and therefore, it was presumed that Mn having been replaced in Li₂RuO₃ was trivalent Mn.

### [SEM-EDS Analysis]

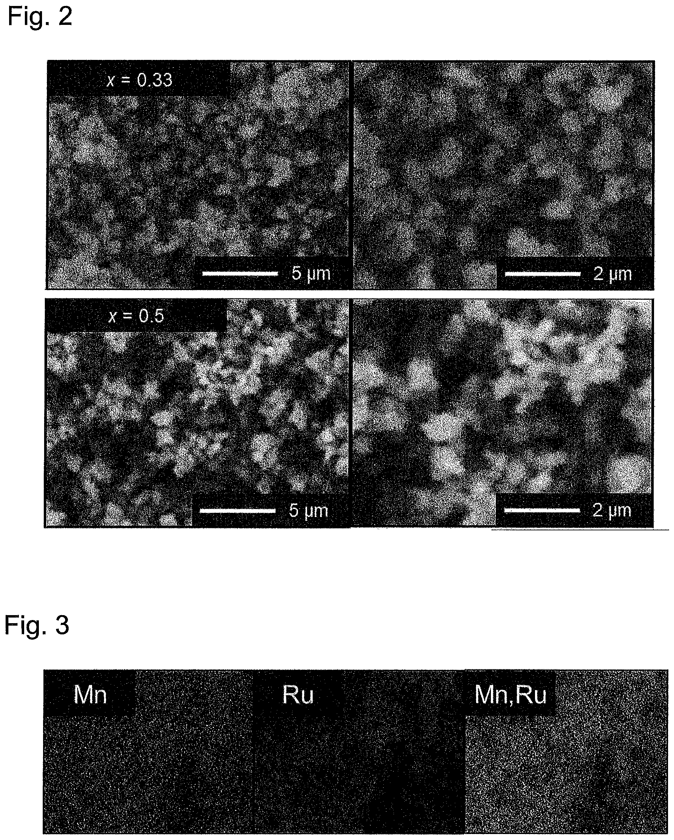

Next, the Li-transition metal composite oxides produced in the present embodiment were observed with SEM, and subjected to EDS analysis. Fig. 2 illustrates SEM images of Li_{1.25}Mn_{0.25}Ru_{0.5}O₂ (x = 0.33) and Li_{1.2}Mn_{0.4}Ru_{0.4}O₂ (x = 0.5). It was confirmed, based on the SEM observation, that primary particles having an average particle size of about 1 µm were observed in all the compositions, and that the compositions have favorable particle sizes. Besides, no difference was found in the particle size depending on the composition (coefficient x). Fig. 3 illustrates a result of the EDS of Li_{1.25}Mn_{0.25}Ru_{0.5}O₂ (x = 0.33), and it is understood that Mn and Ru were present to be close to or superimposed on each other. It was thus confirmed that a solid solution of the respective constituting elements was synthesized in µm size in the present embodiment.

### [Evaluation of Electrochemical Properties]

Then, electrochemical properties of the positive electrode active materials produced in the present embodiment were evaluated. In this evaluation test, each positive electrode active material of the present embodiment was incorporated into a bipolar electrochemical cell (TJ-AC: manufactured by Japan Tomcell Limited Company), and the resultant was subjected to a constant current charging/discharging test. As a positive electrode, one obtained by mixing the positive electrode active material (AM) of the present embodiment, a conductive material (acetylene black: AB), and a binder (polyvinylidene fluoride: PVDF), and subjecting the resultant to a carbon compounding treatment was used. As a negative electrode, one obtained by mixing Li titanate used as a negative electrode active material (AM), AB and PVDF was used. The constitution of the test apparatus was as follows:
- Positive electrode: AM:AB:PVDF = 76.5:13.5:10 (wt%)
- Negative electrode: lithium metal
- Separator: polyolefin porous film (Cell Guard 2500) + glass filter (GB-100R)
- Electrolytic solution (electrolyte/solvent): 1M-LiPF₆/(EC:DMC = 3:7)

In the constant current charging/discharging test, a discharge capacity was measured in the initial charge at room temperature or 28°C in a voltage range of 2.0 V to 4.8 V at a current density of 0.1 mA/cm². Then, the charge and discharge was performed for 5 cycles to 30 cycles to measure a potential-capacity curve.

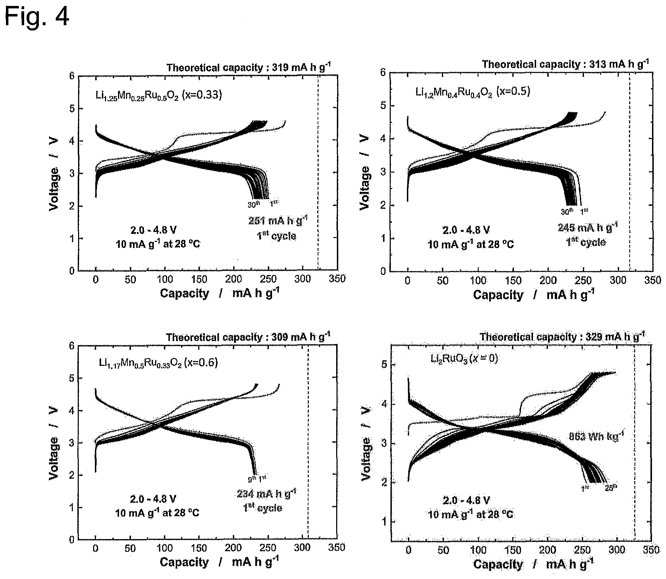

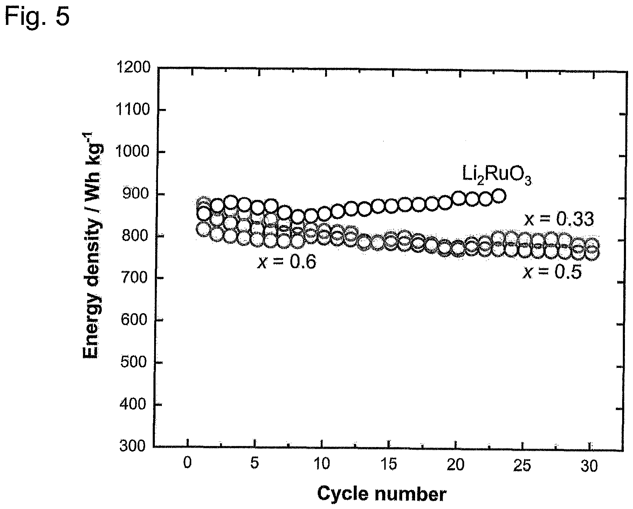

Fig. 4 illustrates results of the constant current charging/discharging test of Li_{1.25}Mn_{0.25}Ru_{0.5}O₂ (x = 0.33), Li_{1.2}Mn_{0.4}Ru_{0.4}O₂ (x = 0.5), and Li_{1.17}Mn_{0.5}Ru_{0.33}O₂ (x = 0.6) of the present embodiment, and Li₂RuO₃ (x = 0) measured for reference. Fig. 5 illustrates graphs of the relationship between cycle number and a discharge capacity obtained based on the results of the constant current charging/discharging test. Referring to Fig. 4, in the positive electrode active material of the present embodiment, there was a potential plateau in the vicinity of a voltage of 4.2 V at the time of the initial charge. This potential plateau was also found in Li₂RuO₃ measured for reference, and is probably derived from similar anionic redox. The initial discharge capacity was 251 mAh/g in Li_{1.25}Mn_{0.25}Ru_{0.5}O₂ (x = 0.33), was 245 mAh/g in Li_{1.2}Mn_{0.4}Ru_{0.4}O₂ (x = 0.5), and 234 mAh/g in Li_{1.17}Mn_{0.5}Ru_{0.33}O₂ (x = 0.6). Since the initial discharge capacity of Li₂RuO₃ measured for reference was 255 mAh/g, it is understood that all the positive electrode active materials of the present embodiment had favorable discharge capacities. Referring to Fig. 5, capacity retention after 30 cycles of Li_{1.25}Mn_{0.25}Ru_{0.5}O₂ (x = 0.33) was 94%, capacity retention after 30 cycles of Li_{1.2}Mn_{0.4}Ru_{0.4}O₂ (x = 0.5) was 92%, and capacity retention after 9 cycles of Li_{1.17}Mn_{0.5}Ru_{0.33}O₂ (x = 0.6) was 99%, and it is thus deemed that these had excellent cycle characteristics.

### [X-ray Absorption Spectroscopy Measurement]

Next, in order to confirm charge compensation mechanism in initial charge and discharge of Li_{1.25}Mn_{0.25}Ru_{0.5}O₂ (x = 0.33) of the positive electrode active material of the present embodiment, the Li-transition metal composite oxides were subjected to X-ray absorption spectroscopy (XANES) measurement of K absorption edge of Mn at respective stages of before charge (immediately after production), initial charge, full charge, and full discharge. At this point, conditions and method for the constant current discharging test were the same as those described above.

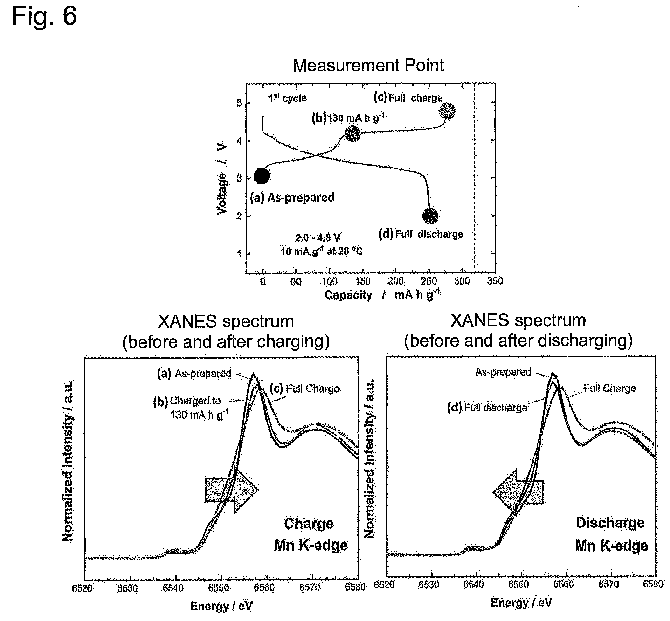

Fig. 6 illustrates XANES spectra of Li_{1.25}Mn_{0.25}Ru_{0.5}O₂ (x = 0.33) at the respective stages. It is noted that lower diagrams of Fig. 6 indicate a point of the XANES measurement in the initial charge and discharge process. It is understood from Fig. 6 that Mn was oxidized because absorption edge energy was shifted at the stage of the initial charge (130 mA/h) toward a higher energy side as compared with that at the stage of before charging. Since this shift of the absorption edge energy continued up to full charge, it is presumed that Mn made a contribution to charge compensation even in the above-described potential plateau in the vicinity of 4.2 V. Then, the absorption edge energy shifted after full discharge toward a lower energy side. This indicates that Mn was reduced (Mn⁴⁺ to Mn³⁺) with the discharge. Therefore, it can be confirmed that the charge compensation of Mn reversibly proceeds in Li_{1.25}Mn_{0.25}Ru_{0.5}O₂ (x = 0.33) replaced with trivalent Mn.

It was confirmed, based on the results of the constant current charging/discharging test (Fig. 5) and the results of examination on change in state of Mn (Fig. 6), that the positive electrode active material of the present embodiment has a high discharge capacity, and a favorable cycle life. In addition, it was confirmed that Mn (trivalent Mn) makes a contribution to these favorable electrochemical properties.

Second Embodiment: In the present embodiment, a positive electrode active material containing a Li-transition metal composite oxide having a composition of the formula (2) (a = 2, and b = 2) in which trivalent Mn (Mn³⁺) and Ti (Ti⁴⁺) were partly replaced in Li₂RuO₃ was produced. Then, the analysis and evaluation similar to those of First Embodiment were performed.

### [Production of Positive Electrode Active Material]

A Li carbonate (Li₂CO₃) powder, a Ru oxide (RuO₂) powder, a Mn oxide (Mn₂O₃) powder, and titanium oxide (TiO₂: anatase type) were mixed to produce a precursor substance. In the present embodiment, the masses of the respective raw material powders were adjusted to obtain (y, z) in the formula (2) of (0.14, 0.14) and (0.21, 0.21), and thus, two precursor substances were produced. A step of mixing the raw material compounds was performed in the same manner as in First Embodiment.

Then, the pellet-shaped precursor substance was fired to obtain a composite oxide. The heating conditions in the firing step were the same as those employed in First Embodiment, and the firing was performed in an argon atmosphere. After the firing step, a Li-transition metal composite oxide of the formula (2) was taken out.

### [XRD Analysis]

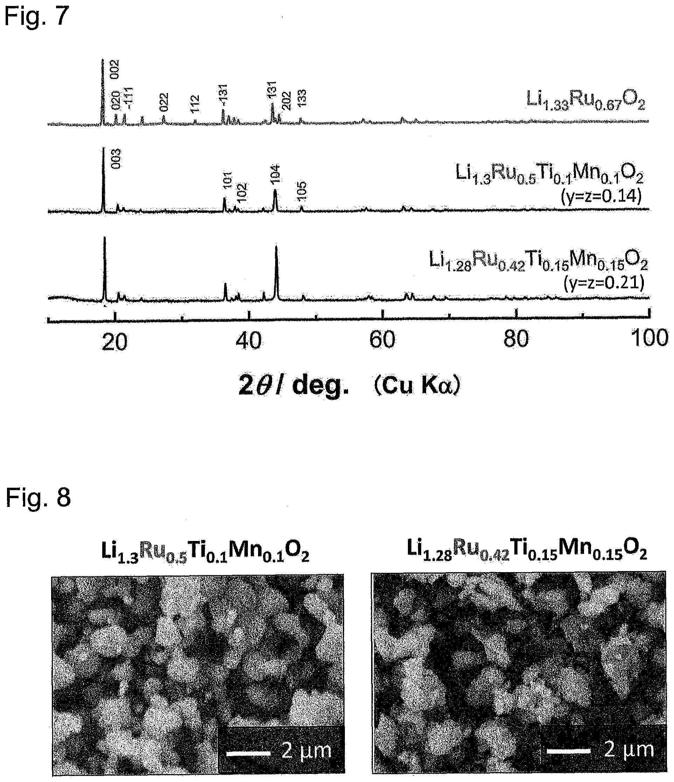

Each of the Li-transition metal composition oxides produced in the present embodiment was subjected to XRD analysis to confirm the crystal structure. The XRD analysis was performed in the same manner as in First Embodiment. Fig. 7 illustrates XRD profiles of the two Li-transition metal composite oxides produced in the present embodiment, that is, Li_{1.3}Ru_{0.5}Mn_{0.1}Ti_{0.1}O₂ (y = z = 0.14) and Li_{1.28}Ru_{0.42}Mn_{0.15}Ti_{0.15}O₂ (y = z= 0.21). It was confirmed based on Fig. 1 that the two Li-transition metal composite oxides produced in the present embodiment (Li_{1.3}Ru_{0.5}Mn_{0.1}Ti_{0.1}O₂ (y = z = 0.14), and Li_{1.28}Ru_{0.42}Mn_{0.15}Ti_{0.15}O₂ (y = z = 0.21)) both had a layered rock salt crystal structure similarly to Li₂RuO₃. Therefore, it was confirmed that the crystal structure is not largely changed by the replacement with Ti and the like.

### [SEM-EDS Analysis]

Also in the present embodiment, the Li-transition metal composite oxides were subjected to SEM observation and EDS analysis. Fig. 8 illustrates SEM images of the respective composite oxides of the present embodiment. Also in the composite oxides of the present embodiment, primary particles having an average particle size of about 1 µm were observed. It was confirmed based on results of the EDS analysis that the Li-transition metal composite oxide of the present embodiment is also a solid solution of the respective constituting elements.

### [Evaluation of Electrochemical Properties]

Then, a constant current charging/discharging test was performed in order to evaluate the electrochemical properties of the produced positive electrode active material. A test apparatus and test conditions employed in the constant current charging/discharging test were the same as those employed in First Embodiment. In the present embodiment, the constant current charging/discharging test was performed by conducting 3 charge and discharge cycles at 50°C in a voltage range of 2.0 V to 4.7 V at a current density of 0.1 mA/cm², and a discharge capacity in the initial charge was measured.

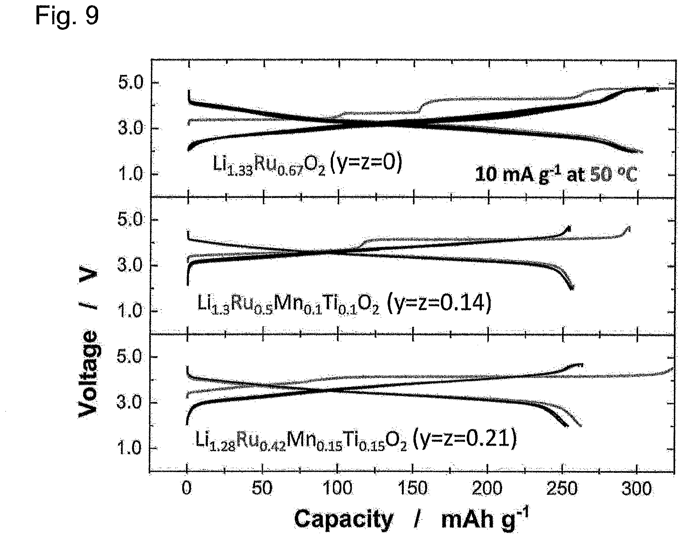

Fig. 9 illustrates results of the constant current charging/discharging test of Li_{1.3}Ru_{0.5}Mn_{0.1}Ti_{0.1}O₂ (y = z = 0.14), and Li_{1.28}Ru_{0.42}Mn_{0.15}Ti_{0.15}O₂ (y = z = 0.21) of the present embodiment, and Li₂RuO₃ (y = z = 0) measured for reference. It was confirmed based on Fig. 9 that the positive electrode active materials of the present embodiment both had an initial discharge capacity of 250 mAh/g or more, and had excellent cycle characteristics. Also in the present embodiment, a potential plateau derived from anionic redox was confirmed at the time of initial charge and discharge similarly to Li₂RuO₃.

Next, in order to confirm durability of the positive electrode active material of the present embodiment, Li_{1.28}Ru_{0.42}Mn_{0.15}Ti_{0.15}O₂ (y = z = 0.21) of the present embodiment and Li_{1.25}Mn_{0.25}Ru_{0.5}O₂ (x = 0.33) that is the Li-transition metal composite oxide of First Embodiment obtained by the replacement with only Mn were subjected to a constant current charging/discharging test (cycle number: 5) at 50°C for comparison. Test conditions were the same as those described above.

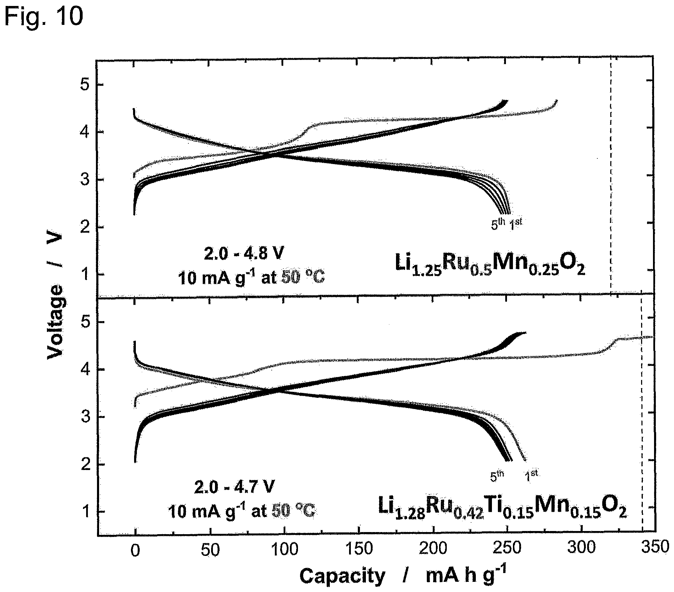

Fig. 10 illustrates results of this constant current discharging test. In both the Li-transition metal composite oxides, the initial discharge capacity was favorable, but in the Li-transition metal composition oxide of First Embodiment (Li_{1.25}Mn_{0.25}Ru_{0.5}O₂ (x = 0.33)), the discharge capacity was lowered slightly with the increase of the cycle number in the second and later cycles. On the contrary, in the Li-transition metal composite oxide of Second Embodiment (Li_{1.28}Ru_{0.42}Mn_{0.15}Ti_{0.15}O₂ (y = z = 0.21)), the extent of lowering of the discharge capacity in the second and later cycles was very small. The Ru amount in the Li-transition metal composite oxide of Second Embodiment was smaller than that in First Embodiment. In spite, it was confirmed that the capacity lowering through charge and discharge cycles was reduced. This is probably because the composite oxide crystal was stabilized through the partial replacement with Ti.

Third Embodiment: In this embodiment, Li_{1.17}Mn_{0.5}Ru_{0.33}O₂ (x = 0.6) of the Li-transition metal composite oxide examined in First Embodiment was evaluated for properties obtained when the constitution of the electrolyte was changed. Here, Li_{1.17}Mn_{0.5}Ru_{0.33}O₂ the same as that used in First Embodiment was incorporated into a bipolar electrochemical cell as the positive electrode active material to perform a constant current charging/discharging test. The constitution of a test apparatus in the constant current charging/discharging test was as follows, which are similar to those of First Embodiment:
- Positive electrode: AM:AB:PVDF = 80:10:10 (wt%)
- Negative electrode: lithium metal
- Separator: polyolefin porous film (Cell Guard 2500) + glass filter (GB-100R)

As for the electrolytic solution, two electrolytic solutions of an electrolytic solution A using LiFSA as an electrolyte, and an electrolytic solution B using LiPF₆ as an electrolyte as in First Embodiment, were examined as follows:
- Electrolytic solution A: 5.3 M - LiFSA (electrolyte)/TMP (electrolytic solution)
- Electrolytic solution B: 1 M - LiPF₆ (electrolyte)/(EC:DMC = 3:7 (electrolytic solution))

In the constant current charging/discharging test, a discharge capacity was measured in the initial charge at 28°C in a voltage range of 2.2 V to 4.5 V at a current density of 0.1 mA/cm². Then, 100 cycles of the charge and discharge was performed to measure a potential-capacity curve.

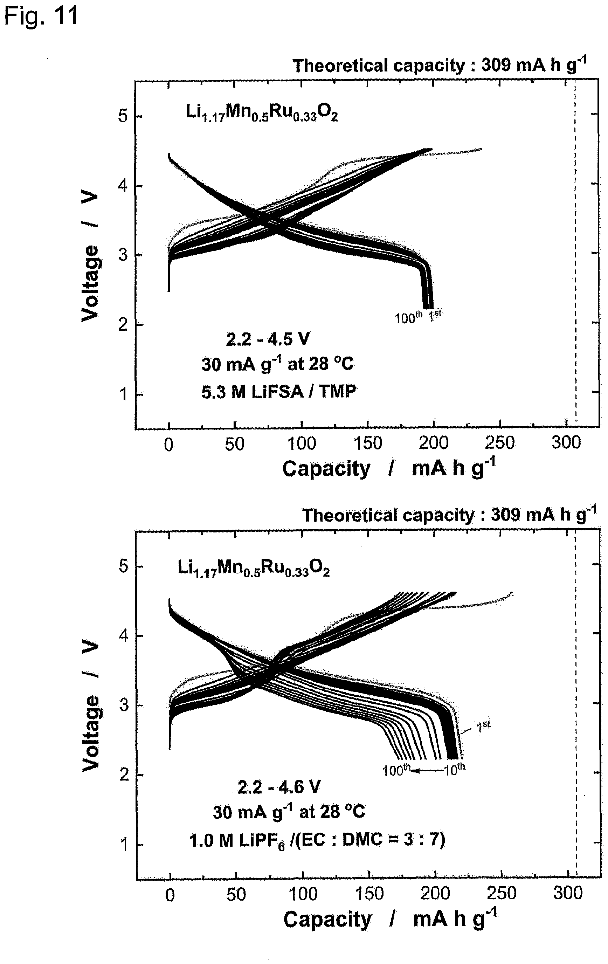

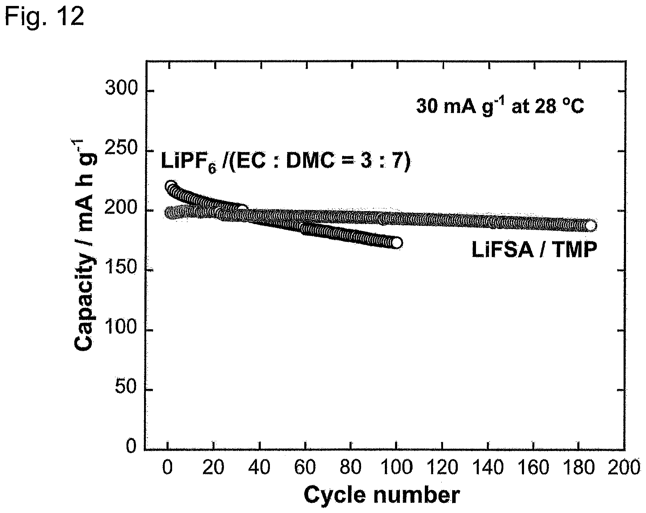

Fig. 11 illustrates results of the constant current charging/discharging test using the electrolytic solution A and the electrolytic solution B in the cells using Li_{1.17}Mn_{0.5}Ru_{0.33}O₂ (x = 0.6) as the positive electrode active material. Fig. 12 is a graph illustrating the relationship between the cycle number and the discharge capacity obtained based on the results of the constant current charging/discharging test. It is understood from these drawings that as properties against an electrolytic solution obtained in using Li_{1.17}Mn_{0.5}Ru_{0.33}O₂ (x = 0.6) as the positive electrode active material, the initial capacity was slightly higher in using the electrolytic solution B (LiPF₆), but the capacity retention after the 100 cycles was higher in using the solution A (LiFSA). It was thus confirmed that the Li₂RuO₃-based oxide replaced with trivalent Mn of the present invention has properties changed depending on the electrolytic solution (electrolyte). In the present embodiment, it is deemed that more excellent cycle property (capacity retention) was exhibited by applying LiFSA as the electrolyte. Therefore, it is deemed, in the present invention, that the electrolytic solution can be selected in accordance with property requirements of a Li-ion secondary battery to which the positive electrode active material is applied.

### Industrial Applicability

As described so far, a positive electrode active material for a Li-ion secondary battery of the present invention is obtained based on a Li₂RuO₃ Li-transition metal composite oxide, and a capacity is increased with a Ru amount reduced by replacement with trivalent Mn. According to the present invention, with the use amount of Ru reduced for reducing cost of the active material, favorable electrochemical properties of Li₂RuO₃ can be maintained. The positive electrode active material of the present invention can be favorably applied to a positive electrode of a Li-ion secondary battery, and can be widely used in various types of small batteries, household power supplies, vehicle batteries and the like.

## Claims

1. A positive electrode active material for a Li-ion secondary battery, comprising a Li-transition metal composite oxide,
wherein the Li-transition metal composite oxide has a layered rock salt crystal structure, and is represented by:
a
formula (1): (1-x)Li₂RuO₃-xLiMnO₂,
wherein Mn is trivalent Mn, and x is a real number satisfying 0 < x < 1.

2. The positive electrode active material for a Li-ion secondary battery according to claim 1, wherein x in the formula (1) satisfies 0.1 ≤ x ≤ 0.9.

3. The positive electrode active material for a Li-ion secondary battery according to claim 1 or 2, wherein a primary particle size of the Li-transition metal composite oxide is 1 µm or more and 50 µm or less.

4. The positive electrode active material for a Li-ion secondary battery according to any one of claims 1 to 3,
wherein the Li-transition metal composite oxide has part of Ru and/or Mn replaced with a metal M, and is represented by:
a
formula (2): (1-y-z)Li₂RuO₃-yLiMnO₂-zLiₐMO_{b}:
wherein the metal M is any one of Ti, Nb, Y, Zr, Hf, and Ta; y and z are real numbers satisfying 0 < y + z < 1; and regarding a, b and c, a = 1 and b = 4 for M of a monovalent metal, a = 2 and b = 3 for M of a tetravalent metal, and a = 3 and b = 4 for M of a pentavalent metal.

5. The positive electrode active material for a Li-ion secondary battery according to claim 4, wherein y + z in the formula (2) satisfies 0.1 ≤ y + z ≤ 0.9.

6. A method for producing the positive electrode active material for a Li-ion secondary battery defined in any one of claims 1 to 3, comprising:
a mixing step of mixing a Li compound, a Ru compound, and a trivalent Mn compound to produce a precursor substance; and
a firing step of heating the precursor substance at 700°C or more and 1100°C or less to generate the Li-transition metal composite oxide,
wherein the firing step is performed in a non-oxidizing atmosphere.

7. A method for producing the positive electrode active material for a Li-ion secondary battery defined in claim 4 or 5, comprising:
a step of mixing a Li compound, a Ru compound, a trivalent Mn compound, and a compound of the metal M to produce a precursor substance; and
a firing step of heating the precursor substance at 800°C or more and 1100°C or less to generate the Li-transition metal composite oxide,
wherein the firing step is performed in a non-oxidizing atmosphere.

8. A positive electrode for a Li-ion secondary battery, comprising the positive electrode active material for a Li-ion secondary battery defined in any one of claims 1 to 5.

9. A Li-ion secondary battery, comprising the positive electrode for a Li-ion secondary battery defined in claim 8.
